# EUROPEAN PATENT APPLICATION

(11) **EP 4 303 193 A1**
(43) Date of publication of application: **10.01.2024**
(21) Application number: 22763461.5
(22) Date of filing: 17.01.2022
(51) Int. Cl.: C02F 1/72, C02F 1/66, C02F 1/58

(54) **MIXED OXIDIZING AGENT FOR TREATING REFRACTORY WASTEWATER AND METHOD FOR TREATING WASTEWATER USING OXIDIZING AGENT**

(30) Priority: 03.03.2021 KR 20210028092
(71) Applicant: Techwin Co., Ltd., Cheongju-si, Chungcheongbuk-do 28580 (KR)
(72) Inventor: HYUN, Jun Taek, Cheongju-si Chungcheongbuk-do 28124 (KR); LEE, Seung Hyun, Cheongju-si Chungcheongbuk-do 28562 (KR); SHIN, Hyun Su, Daejeon 34390 (KR); KIM, Jung Sik, Sejong 30098 (KR)
(74) Representative: Plasseraud IP
(86) International application number: PCT/KR2022/000786
(87) International publication number: WO 2022/186475

(57) **Abstract**

The present invention relates to a mixed oxidizing agent for treating refractory wastewater and a method for treating wastewater using the oxidizing agent, and more specifically, is composed of: an oxidizing agent injection step of injecting, into refractory wastewater containing organic pollutants and ammonia nitrogen, a mixed oxidizing agent for treating wastewater, the mixed oxidizing agent composed of 1 to 99 mol% of persulfate and 1 to 99 mol% of a chlorine-based oxidizing agent; and an oxidizing agent activation step of activating the oxidizing agent contained in the refractory wastewater via the oxidizing agent injection step. The mixed oxidizing agent for treating refractory wastewater composed of the above components, and the method for treating wastewater using the oxidizing agent, can remove organic pollutants and ammonia nitrogen contained in the refractory wastewater with high efficiency and low cost.

## Description

### [Technical field]

The present invention relates to a mixed oxidizer for recalcitrant wastewater treatment, and a method of treating wastewater using the oxidizer, more specifically, a mixed oxidizer for recalcitrant wastewater treatment that may remove organic pollutants (total organic carbon, TOC) and ammonia nitrogen (NH₃-N) contained in the recalcitrant wastewater with high efficiency at low cost, and a method of treating wastewater using the oxidizer.

### [Background Art]

Ethanolamine (NH₂CH₂CH₂OH), known as a recalcitrant substance, is an organic compound used as a pH adjusting agent for the secondary system water of nuclear power plants. It is a stable organic compound with low volatility and high basicity compared to ammonia, which is an existing pH adjusting agent, so that it is possible to control pH with only a small injection amount, and the compound is advantageous in terms of corrosion management of devices, and its effectiveness has been verified. However, from an environmental point of view, ethanolamine, which is a stable organic compound, is difficult to remove with existing wastewater treatment equipment and is a causative substance that greatly increases the concentration of organic pollutants and ammonia nitrogen in wastewater. In addition, it is known as a recalcitrant organic material that is difficult to be degraded by microorganisms. In order to remove these recalcitrant substances, strong oxidizers such as hydroxyl radicals (OH) or sulfate radicals (SO₄⁻·) are required.

A representative advanced oxidation process (AOP) generating hydroxyl radicals include Fenton oxidation and ozone oxidation. Fenton oxidation is an oxidation treatment method in which divalent iron ions with hydrogen peroxide are reacted to generate hydroxyl radicals (OH·), which are strong oxidizers, and recalcitrant organic pollutants are removed using the generated hydroxyl radicals. However, Fenton oxidation requires a large amount of iron ions and hydrogen peroxide to generate hydroxyl radicals, and the iron ions injected in large amounts generate excessive sludge and increase the consumption of relatively expensive hydrogen peroxide, resulting in a disadvantage that the economic feasibility is greatly reduced. In addition, since the Fenton reaction may treat pollutants only under acidic conditions, precise pH management of the wastewater to be treated is required.

Fe²⁺ +H₂O₂ → Fe²⁺ + OH- + OH⁻ (1)

Ozone oxidation is an oxidation treatment method in which recalcitrant organic pollutants are removed with an ozone oxidizer injected into wastewater and a hydroxyl radical, which is a strong oxidizer generated during the decomposition process of the injected ozone. However, the ozone oxidation method does not have a high treatment rate for recalcitrant organic substances due to the low generation of hydroxyl radicals, and since the oxidation method varies depending on acidic and basic conditions, pH control of target wastewater is also required.

O₃ + OH- → HO₂· + O₂ (2)

OH_{2·}→ O₂⁻ + H⁺ (3)

O₃ + O₂⁻ → O₃ + O₂ (4)

O₃⁻ + H⁺ ↔ HO₃· (5)

HO₃. → OH + O₂ (6)

A method of removing recalcitrant organic pollutants using sulfuric acid radicals (SO₄⁻·) is a method of injecting sodium persulfate (Na₂S₂O₈), ammonium persulfate (NH₄)₂S₂O₈), potassium persulfate (K₂S₂O₈), and potassium peroxymonosulfate (KHSOs) having anions, persulfate (S₂O₈²⁻ and SO₅²⁻), into target wastewater and activating it to remove the recalcitrant organic pollutants. Sulfuric acid radicals are generated by activation methods such as heating, ultraviolet irradiation, and injection of metal, base, or chelate metal catalysts.

S₂O₈²⁻ + heat → 2SO₄⁻· (7)

S₂O₈²⁻ + UV → SO₄⁻· + SO₄²⁻ (8)

S₂O₈²⁻ + Fe²⁺ → SO₄⁻· + Fe³⁺ + SO₄²⁻ (9)

Korean Patent Registration No. 10-1533979 (ethanolamine-containing secondary wastewater treatment process of nuclear power plant) discloses a process of removing organic pollutants (COD) using an oxidizer in which sodium persulfate and sodium percarbonate (Na₂H₃CO₆) are mixed.

However, since a wastewater treatment method using hydroxyl radicals and sulfuric acid radicals, which are strong oxidizers, only removes organic pollutants in wastewater, when treating wastewater in which pollutants that simultaneously increase the concentration of organic pollutants, such as ethanolamine, and ammonia nitrogen, are introduced or each pollutant leading to an increased concentration of an organic pollutant and ammonia nitrogen are mixed, a treatment process for removing ammonia nitrogen needs to be added before and after an organic pollutant treatment process.

Representative methods for removing ammonia nitrogen include ammonia stripping and breakpoint chlorination. Ammonia stripping is a process in which ammonia is released into the atmosphere by blowing air and ammonia nitrogen is removed by spraying water having a pH of 11 to 12. Breakpoint chlorination is a process of injecting enough chlorine into wastewater to remove ammonia nitrogen, and the reaction scheme is as follows.

NH₄⁺ + 1.5HOCl → 0.5N₂ + 1.5H₂O + 2.5H⁺ + 1.5Cl⁻ (10)

### [Disclosure]

### [Technical Problem]

The present invention is directed to providing a mixed oxidizer for recalcitrant wastewater treatment, which simultaneously removes organic pollutants and ammonia nitrogen contained in recalcitrant wastewater with high efficiency, and a method of treating wastewater using the oxidizer.

### [Technical Solution]

An object of the present invention is achieved by providing a mixed oxidizer for recalcitrant wastewater treatment, characterized in that it is composed of 1 to 99 mol% of a persulfate and 1 to 99 mol% of a chlorine-based oxidizer.

According to a preferred feature of the present invention, the persulfate includes persulfate (S₂O₈²⁻ and SO₅²⁻) generating sulfuric acid radicals (SO₄⁻·).

According to a more preferred feature of the present invention, the chlorine-based oxidizer is composed of at least one selected from the group consisting of chlorine, hypochlorite, and chlorine-containing alkali metals and alkaline earth metals.

According to a more preferred feature of the present invention, it is important for the mixed oxidizer for treating recalcitrant wastewater to maintain the performance of the oxidizer, which is achieved by adding a stabilizer to the mixed oxidizer to adjust and maintain the pH of the mixed oxidizer at 5 or higher.

According to a more preferred feature of the present invention, the stabilizer is composed of a pH adjusting agent for adjusting the pH and a buffer solution capable of adjusting and maintaining the pH at a constant value.

According to a further preferred feature of the present invention, the stabilizer further includes an additive composed of one or more selected from the group consisting of an indicator and a promoter.

In addition, an object of the present invention is achieved by a method of treating recalcitrant wastewater, including an oxidizer input step of inputting a mixed oxidizer consisting of a persulfate and a chlorine-based oxidizer into recalcitrant wastewater containing organic pollutants and ammonia nitrogen, and an oxidizer activation step of activating the oxidizer input into the recalcitrant wastewater via the oxidizer input step.

According to a preferred feature of the present invention, the oxidizer input step is performed by inputting 1000 to 13000 parts by weight of the mixed oxidizer composed of the persulfate and chlorine-based oxidizer based on 100 parts by weight of the organic pollutants contained in the recalcitrant wastewater.

According to a more preferred feature of the present invention, the oxidizer activation step is performed by at least one selected from the group consisting of heating, ultraviolet irradiation, and input of a catalyst, and the catalyst is composed of at least one selected from the group consisting of metal catalysts, base catalysts and chelate metal catalysts.

According to a more preferred feature of the present invention, the heating is performed for 10 to 100 minutes at a temperature of 50 °C to a boiling point.

According to a more preferred feature of the present invention, a pH adjusting step of adjusting a pH of the recalcitrant wastewater to 4 to 13 by adding a pH adjusting agent to the recalcitrant wastewater is further performed before the oxidizer input step.

### [Advantageous Effects]

The mixed oxidizer for treating recalcitrant wastewater and the method of treating the wastewater using the mixed oxidizer according to the present invention can exhibit excellent effects of simultaneously removing organic contaminants and ammonia nitrogen contained in the recalcitrant wastewater with high efficiency.

When the mixed oxidizer of the present invention is applied to the existing wastewater treatment process, an ammonia nitrogen treatment process can be excluded or the capacity of the ammonia nitrogen treatment tank can be reduced and installed, so that it can be expected to reduce initial investment costs, chemical usage, and wastewater treatment operation costs due to a reduction in electricity costs.

### [Description of Drawings]

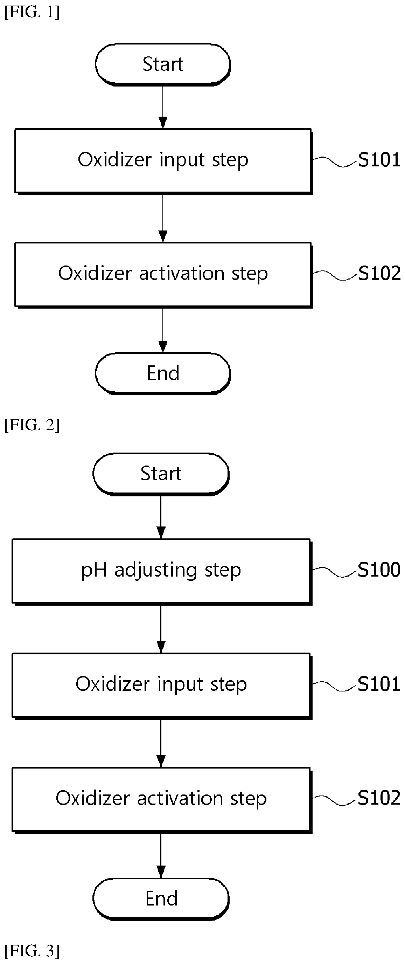

FIG. 1 is a flow chart showing a method of treating recalcitrant wastewater according to an embodiment of the present invention.
FIG. 2 is a flow chart showing a method of treating recalcitrant wastewater according to another embodiment of the present invention.
FIG 3 is a photograph showing an experimental apparatus used to proceed with an embodiment of the present invention.
FIG. 4 is a graph showing the pH measurement results of a mixed oxidizer solution achieved through Example 2 and Comparative Example 3.
FIG. 5 is a graph showing the results of measuring TOC and TN removal efficiencies achieved through Example 2 and Comparative Example 3.

### [Modes of the Invention]

Hereinafter, preferred embodiments of the present invention and the physical properties of each component are described in detail, but this is to explain in enough detail that a person with ordinary knowledge in the art to which the present invention belongs can easily practice the invention, and is not meant to limit the technical spirit and scope of the present invention.

A mixed oxidizer for recalcitrant wastewater treatment according to the present invention may be composed of a persulfate and a chlorine-based oxidizer, and is preferably composed of 1 to 99 mol% of a persulfate and 1 to 99 mol% of a chlorine-based oxidizer.

A mixing molar fraction of the persulfate and chlorine-based oxidizer of the mixed oxidizer is preferably determined by varying a mixing ratio according to the concentration of organic pollutants (TOC) in wastewater, the concentration of ammonia nitrogen, and the degree of recalcitrance.

In addition, during the preparation of the mixed oxidizer, when a mixing molar ratio of the persulfate and the chlorine-based oxidizer is less than 1% or greater than 99%, a removal rate of organic pollutants (TOC) or ammonia nitrogen is reduced, thereby reducing the effect obtained by using the mixed oxidizer.

In addition, the persulfate oxidizer may include persulfate anions (S₂O₈²⁻ and SO₅²⁻) that generate sulfuric acid radicals (SO₄⁻·).

In addition, the chlorine-based oxidizer may be composed of at least one selected from the group consisting of chlorine, hypochlorite (sodium hypochlorite, potassium hypochlorite, and calcium hypochlorite), chlorine-containing alkali metals and alkaline earth metals.

It is important for the mixed oxidizer to maintain the performance of the oxidizer for a long time, which is achieved by adding a stabilizer to the mixed oxidizer to adjust and maintain the pH of the mixed oxidizer at 5 or higher.

The stabilizer is composed of a pH adjusting agent and a buffer solution for adjusting and maintaining the pH, and the buffer solution refers to a solution in which the change in pH, which is the concentration of hydrogen ions, is not large due to the common ion effect even when an acid and a base are added.

In addition, when the pH of the mixed oxidizer is lowered to less than 5, the stability of the mixed oxidizer decreases, and the removal rate of organic pollutants and ammonia nitrogen of the mixed oxidizer also decreases.

The buffer solution may be prepared by combining a weak acid such as phosphate, bicarbonate, carbonate, citric acid, formate, acetic acid, sodium hydroxide, potassium hydroxide, nitric acid, or sulfuric acid with a conjugate base, or a weak base with a conjugate acid.

The stabilizer may further contain one or more additives selected from the group consisting of an indicator and a promoter, the indicator changes the color of the solution according to the change in pH of the mixed oxidizer, so that the degree of stabilization of the mixed oxidizer may be observed with the naked eye, and the promoter serves to improve the oxidizing power of the oxidizer when the mixed oxidizer is activated.

As the indicator, components such as ethyl red, methyl red, propyl red, bromocresol purple, bromothymol blue, cresol red, and phenolphthalein whose color changes with pH change may be applied.

In addition, the promoter may be composed of at least one selected from the group consisting of basic substances such as sodium hydroxide, bicarbonates, carbonates, and iron ions.

In addition, the method of treating recalcitrant wastewater according to the present invention includes an oxidizer input step (S101) of inputting a mixed oxidizer consisting of persulfate and a chlorine-based oxidizer into recalcitrant wastewater, and an oxidizer activation step (S102) of activating the oxidizer after the recalcitrant wastewater is input via the oxidizer input step (S101).

The oxidizer input step (S101) is a step of inputting a mixed oxidizer consisting of a persulfate and a chlorine-based oxidizer into recalcitrant wastewater, and is performed by inputting 1000 to 13000 parts by weight of a mixed oxidizer composed of a persulfate and a chlorine-based oxidizer based on 100 parts by weight of the organic pollutants (TOC) contained in the recalcitrant wastewater.

The persulfate preferably includes persulfate anions (S₂O₈²⁻ and SO₅²⁻) that generate sulfuric acid radicals.

In addition, the chlorine-based oxidizer may be composed of at least one selected from the group consisting of chlorine, hypochlorite (sodium hypochlorite, potassium hypochlorite, calcium hypochlorite, and the like), chlorine-containing alkali metals and alkaline earth metals.

In addition, the input of 1000 to 13,000 parts by weight of a mixed oxidizer consisting of a persulfate and a chlorine-based oxidizer based on 100 parts by weight of organic pollutants (TOC) contained in the wastewater means that an input amount becomes 10 g to 100 g based on solutes dissolved in the solution of the mixed oxidizer in which the persulfate and chlorine-based oxidizer are mixed in a molar ratio relative to 1 g of total organic carbon based on solutes present in the wastewater are added.

In addition, when the content of the mixed oxidizer is less than 1000 parts by weight, the effect of removing organic pollutants (TOC) and ammonia nitrogen contained in the recalcitrant wastewater is greatly reduced, and when the content of the mixed oxidizer exceeds 13000 parts by weight, removal effect is not greatly improved, the economic feasibility is greatly reduced, and the recalcitrant wastewater is again contaminated with sulfate and the chlorine-based oxidizer.

The oxidizer activation step (S 102) is a step of activating the oxidizer input via the oxidizer input step (S 101), and activation of the recalcitrant wastewater into which the oxidizer is input through the oxidizer input step (S101) may be performed by at least one selected from the group consisting of heating, ultraviolet irradiation, and input of a catalyst, and the catalyst may be composed of at least one selected from the group consisting of metal catalysts, base catalysts and chelate metal catalysts.

In the oxidizer activation step (S 102), the oxidizer activation by heating may be performed for 10 minutes to 100 minutes at a temperature of 50 °C to a boiling point.

At this time, when the heating temperature of the oxidizer activation step (S 102) is less than 50 ° C or the heating time is less than 10 minutes, the effect of removing organic pollutants (TOC) and ammonia nitrogen contained in the recalcitrant wastewater is reduced, and when the heating temperature of the oxidizer activation step (S 102) exceeds the boiling point or the heating time exceeds 100 minutes, the above effect is not greatly improved, and it is not desirable in terms of energy efficiency.

In addition, before the oxidizer input step (S 101), a pH adjusting step (S 100) of adjusting the pH of the recalcitrant wastewater to 4 to 13 by adding a pH adjusting agent to the recalcitrant wastewater may be further performed.

When the oxidizer input step (S 101) and the oxidizer activation step (S 102) are performed in the recalcitrant wastewater whose pH is adjusted to 4 to 13 by performing the pH adjusting step (S 100), the effect of removing organic pollutants (TOC) and ammonia nitrogen contained in the recalcitrant wastewater is further improved, but when the pH of the recalcitrant wastewater is less than 4, the effect of removing ammonia nitrogen contained in the organic wastewater is reduced, and when the pH exceeds 13, it is undesirable in terms of economics.

Hereinafter, a method of preparing a mixed oxidizer for recalcitrant wastewater treatment according to the present invention, a method of treating recalcitrant wastewater using the mixed oxidizer for treating recalcitrant wastewater prepared through the preparation method, and effects thereof will be described with examples.

In order to perform Examples and Comparative Examples, ethanolamine was mixed with tertiary distilled water to prepare simulated recalcitrant wastewater. In addition, a mixed oxidizer was prepared using sodium persulfate (Na₂S₂O₈) and sodium hypochlorite (NaOCI).

Ethanolamine in the simulated recalcitrant wastewater was prepared at a concentration of 0.025M when the oxidizer was mixed, and the total organic carbon (TOC) concentration of this solution was measured to be about 600 ppm and the total nitrogen (TN) concentration was measured to be about 350 ppm. In addition, the mixed oxidizer was activated by heating.

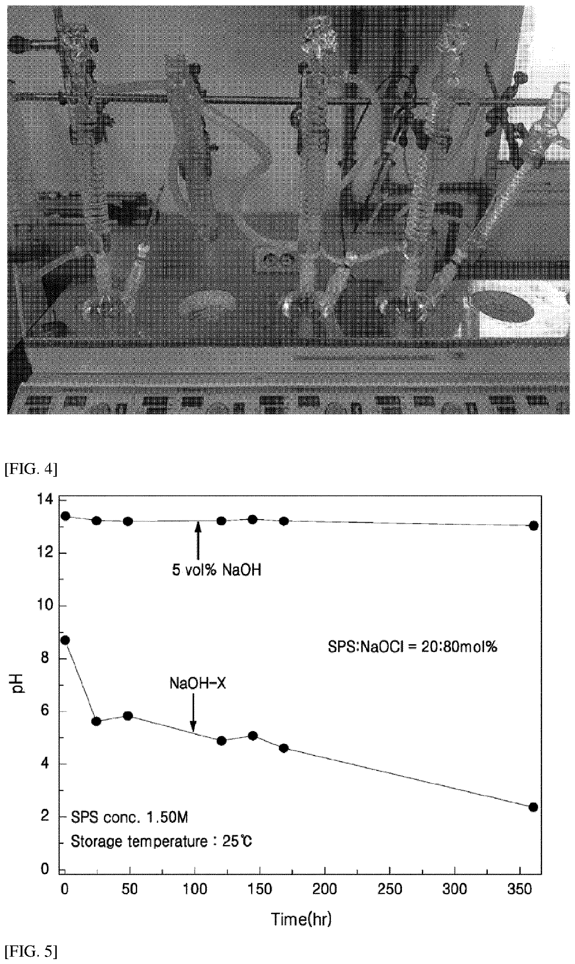

As shown in FIG. 3, the example was performed using a device equipped with a heating mantel capable of temperature control and stirring of the solution and a double-jacketed coil cooling tube capable of minimizing evaporation of the solution during heating.

### <Example 1>

Simulated recalcitrant wastewater (TOC 630 ppm, TN 380 ppm) was prepared by mixing ethanolamine and deionized water, and a mixed oxidizer was prepared by mixing 20 to 98 mol fraction (mol%) of sodium persulfate and 80 to 2 mol fraction (mol%) of sodium hypochlorite. A mixing molar fraction of the mixed oxidizer and an input amount relative to organic pollutants (TOC) are shown in Tables 1 and 2 below.

Using the device shown in FIG. 3, the temperature of the simulated recalcitrant wastewater prepared from ethanolamine was heated to 90 °C, and each of the mixed oxidizers prepared in molar fractions shown in Table 1 below was injected into the above simulated recalcitrant wastewater to be 0.15M (6000 parts by weight). After injecting the mixed oxidizer, organic pollutants and ammonia nitrogen were treated while maintaining at 90 °C for 30 minutes, and the simulated recalcitrant wastewater heated to 90 °C was cooled with water to room temperature, and total organic carbon (TOC) and total nitrogen (TN) concentrations in the simulated wastewater were analyzed.

Table 1 below shows the molar concentration and molar ratio of the oxidizer mixture.

**[Table 1]**

| Molar concentration (mol/L) | | | Molar ratio (mol%) | | |
|---|---|---|---|---|---|
| Sulfate | Hypochlorite | Sum | Sulfate | Hypochlorite | Sum |
| 0.030 | 0.120 | 0.150 | 20 | 80 | 100 |
| 0.075 | 0.075 | 0.150 | 50 | 50 | 100 |
| 0.120 | 0.030 | 0.150 | 80 | 20 | 100 |
| 0.130 | 0.020 | 0.150 | 87 | 13 | 100 |
| 0.135 | 0.015 | 0.150 | 90 | 10 | 100 |
| 0.140 | 0.010 | 0.150 | 93 | 7 | 100 |
| 0.145 | 0.005 | 0.150 | 97 | 3 | 100 |
| 0.147 | 0.003 | 0.150 | 98 | 2 | 100 |

### <Comparative Example 1>

A method was performed in the same manner as in Example 1, except that simulated recalcitrant wastewater prepared with ethanolamine was treated using sodium persulfate instead of the mixed oxidizer, and after treatment, the concentrations of residual TOC and TN in the wastewater were analyzed.

### <Comparative Example 2>

A method was performed in the same manner as in Example 1, except that simulated recalcitrant wastewater prepared with ethanolamine was treated using potassium persulfate instead of the mixed oxidizer, and after treatment, the concentrations of residual TOC and TN in the wastewater were analyzed.

The analysis results of Example 1 and Comparative Examples 1 and 2 (changes in concentrations of TOC and TN when the simulated wastewater was treated with an oxidizer mixture) are shown in Table 2 below.

**[Table 2]**

| Mixed oxidizer molar fraction | | Molar concentration sum (mol/L) | Mixed oxidizer/TOC (g/g) | Removal rate | |
|---|---|---|---|---|---|
| Persulfate (mol%) | Sodium hypochlorite (mol%) | | | TOC (%) | TN (%) |
| 20 | 80 | 0.15 | 12 | 99 | 84 |
| 50 | 50 | 0.15 | 39 | 93 | 93 |
| 80 | 20 | 0.15 | 51 | 86 | 73 |
| 87 | 13 | 0.15 | 54 | 93 | 66 |
| 90 | 10 | 0.15 | 55 | 94 | 57 |
| 93 | 7 | 0.15 | 57 | 95 | 52 |
| 97 | 3 | 0.15 | 58 | 99 | 44 |
| 98 | 2 | 0.15 | 59 | 98 | 25 |
| Comparative Example 1) Sodium Persulfate | | 0.15 | 60 | 100 | 11 |
| Comparative Example 2) Potassium persulfate | | 0.15 | 68 | 98 | 14 |

As shown in Table 2, the TOC removal rate of Example 1 showed a minimum of 93% and a maximum of 99% according to the mixing ratio of the mixed oxidizer, and the average removal rate was 95%, which was similar to the TOC removal rates of Comparative Examples 1 and 2. In addition, the TN removal rate of Example 1 ranged from 25% to 84% depending on the mixing ratio of sodium hypochlorite, and the average removal rate was 62%, which was significantly higher than Comparative Examples 1 and 2.

As a result, it was found that the mixed oxidizer of Example 1 simultaneously removed TOC and TN with high efficiency even when a smaller amount of oxidizer was added than the persulfates of Comparative Examples 1 and 2.

### <Example 2>

A method was performed in the same manner as in Example 1, except that a stabilizer was added to a mixed oxidizer in which sodium persulfate and sodium hypochlorite were mixed in a molar ratio of 20:80 to adjust the pH to 13 or more. At this time, NaOH having a mass concentration of 50% was used to adjust the pH to 13 or more, and was added to the mixed oxidizer so that its amount became 5 vol%. The storage temperature of the oxidizer mixture was maintained at 25 °C, and the pH change and the TOC and TN removal effect over time were confirmed. The TOC and TN removal effect was confirmed by performing an experiment using simulated recalcitrant wastewater prepared with the same ethanolamine as that used in Example 1.

### <Comparative Example 3>

A method was performed in the same manner as in Example 2 except that a stabilizer was not added, and the pH change and the TOC and TN removal effect over time were confirmed.

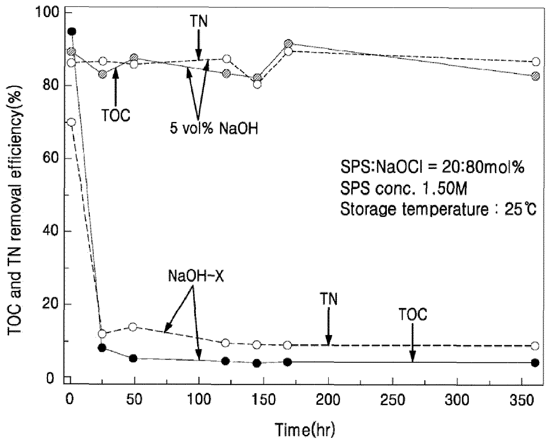

The TOC and TN removal efficiency measurement results of Example 2 and Comparative Example 3 are shown in FIGS. 4 and 5. Looking at the results of Example 2, in which the pH did not change over time due to the addition of the stabilizer, the TOC and TN removal rates showed similar results regardless of the storage time after preparation of the mixed oxidizer. On the other hand, looking at the results of Comparative Example 3, in which the pH decreased over time because no stabilizer was added, it was shown that TOC and TN removal rates rapidly decreased to 10% or less after about 24 hours of storage time of the mixed oxidizer had elapsed.

Therefore, the mixed oxidizer for treating recalcitrant wastewater and the method of treating the wastewater using the mixed oxidizer according to the present invention, can remove organic pollutants and ammonia nitrogen contained in the recalcitrant wastewater with high efficiency.

### [Industrial Applicability]

The present invention can be used to remove organic pollutants (total organic carbon, TOC) and ammonia nitrogen (NH₃⁻N) contained in recalcitrant wastewater with high efficiency at low cost.

## Claims

1. A mixed oxidizer for recalcitrant wastewater treatment, comprising 1 to 99 mol% of a persulfate and 1 to 99 mol% of a chlorine-based oxidizer.

2. The mixed oxidizer of claim 1, wherein the persulfate is composed of persulfates (S₂O₈²⁻and SO₅²⁻) generating sulfuric acid radicals (SO₄⁻·).

3. The mixed oxidizer of claim 1, wherein the chlorine-based oxidizer is composed of one or more selected from the group consisting of chlorine, hypochlorite, and chlorine-containing alkali metals and alkaline earth metals.

4. The mixed oxidizer of claim 1, wherein a stabilizer is further added to the mixed oxidizer for treating recalcitrant wastewater.

5. The mixed oxidizer of claim 4, wherein the stabilizer adjusts and maintains a pH of the mixed oxidizer at 5 or more.

6. The mixed oxidizer of claim 5, wherein the stabilizer is composed of a pH adjusting agent for adjusting pH and a buffer solution capable of adjusting and maintaining pH at a constant value.

7. The mixed oxidizer of claim 5, wherein the stabilizer further comprises an additive composed of one or more selected from the group consisting of an indicator and a promoter.

8. A method of treating recalcitrant wastewater, comprising:
an oxidizer input step of inputting a mixed oxidizer consisting of a persulfate and a chlorine-based oxidizer into recalcitrant wastewater containing organic pollutants and ammonia nitrogen; and
an oxidizer activation step of activating the oxidizer input into the organic wastewater through the oxidizer input step.

9. The method of claim 8, wherein the oxidizer input step is performed by inputting 1000 to 13000 parts by weight of the mixed oxidizer composed of the persulfate and chlorine-based oxidizer based on 100 parts by weight of the organic pollutants contained in the recalcitrant wastewater.

10. The method of claim 8, wherein
the oxidizer activation step is performed by one or more selected from the group consisting of heating, ultraviolet irradiation, and input of a catalyst, and
the catalyst is composed of one or more selected from the group consisting of metal catalysts, base catalysts and chelate metal catalysts.

11. The method of claim 10, wherein the heating is performed for 10 to 100 minutes at a temperature of 50 °C to a boiling point.

12. The method according to claim 8, wherein a pH adjusting step of adjusting a pH of the recalcitrant wastewater to 4 to 13 by adding a pH adjusting agent to the recalcitrant wastewater is further performed before the oxidizer input step.
